# EUROPÄISCHE PATENTANMELDUNG

(11) **EP 1 160 473 A2**
(43) Veröffentlichungstag der Anmeldung: **05.12.2001**
(21) Anmeldenummer: 01111888.2
(22) Anmeldetag: 17.05.2001
(51) Int. Cl.: F16D 41/06

(54) **Klemmrollen-Freilaufkupplung**

(30) Priorität: 02.06.2000 DE 20009895 U
(71) Anmelder: INA Wälzlager Schaeffler oHG, 91074 Herzogenaurach (DE)
(72) Erfinder: Stark, Johann, Dipl.-Ing., 91315 Höchstadt (DE)

(57) **Zusammenfassung**

Die Neuerung betrifft eine Freilaufkupplung zur Aufnahme einer Welle (10) mit einem Klemmflächen tragenden Außenring, in dem ein Klemmrollen (6) führender und mit Federelementen (8) zur Anfederung der Klemmrollen (6) versehener Käfig (5) angeordnet ist.

Neuerungsgemäß weisen die Klemmrollen (6) an wenigstens einer ihrer beiden Stirnseiten eine kegelstumpfartige Fase (9) derart auf, dass bei nicht eingeschobener Welle (10) der Hüllkreisdurchmesser D_{HK} des Kegelstumpfes an seinem äußeren Ende gleich oder größer als der Durchmesser Dw der Welle (10) ist.

Somit ist eine automatische Montage der gesamten Freilaufkupplung möglich, da die Welle (10) ohne Probleme in den Käfig (5) eingeschoben werden kann.

## Beschreibung

### Anwendungsgebiet der Neuerung

Die Neuerung betrifft eine Freilaufkupplung zur Aufnahme einer Welle mit einem Klemmflächen tragenden Außenring, in dem ein Klemmrollen führender und zu deren Anfederung mit Federelementen versehener Käfig angeordnet ist.

### Hintergrund der Neuerung

Eine derartige Freilaufkupplung in Form eines Hülsenfreilaufes ist aus der DE 42 10 560 C2 vorbekannt. Eine spanlos geformte mit einem Bord versehene Hülse weist an ihrer inneren Mantelfläche Klemmrampen auf, an die im Klemmzustand in einem Käfig geführte gefederte Klemmnadeln anliegen. Die Klemmnadeln sind an ihren gegenüberliegenden Stirnflächen leicht verrundet, um das sogenannte Kantentragen, d. h. eine die Lebensdauer herabsetzende Überbeanspruchung der Klemmrollen in ihren Endbereichen zu vermeiden.

Nachteilig dabei ist, dass bei einer automatischen Montage trotzt dieser Durchmesserherabsetzung im Endbereich der Klemmrollen Montageprobleme auftreten können. Insbesondere bei sehr scharfkantigen Wellen kann es vorkommen, dass beim axialen Einschieben der Welle diese mit ihrer Stirnfläche an die Stirnflächen der Klemmrollen anstößt. Auch durch Drehen in Überholrichtung werden nicht alle Klemmrollen aus der Klemmspalte gedreht, so dass eine automatische störungsfreie Montage nicht möglich ist. Die Ursache liegt darin, dass die Klemmnadelanfederung die Klemmnadel im nichtmontierten Zustand an den nächsten Steg oder an die nächste Nadelhalterung andrückt. Hierbei wird über die Klemmkontur die Klemmnadel bzw. die Klemmrolle radial nach innen gedrückt. Somit ist der Hüllkreisdurchmesser des nicht montierten Freilaufes kleiner als der Durchmesser der Welle. Es erfolgt beim axialen Einschieben der Welle eine Kollision zwischen dieser und den Klemmrollen, die zur Zerstörung des Käfigs oder der ganzen Freilaufanordnung führen kann.

Nun sind zwar in diesem Zusammenhang Klemmrollen bekannt, die in ihrem Endbereich ebenfalls einen verringerten Durchmesser aufweisen. So ist beispielsweise in der DE-OS 16 25 743 ein Klemmrollen-Freilauf beschrieben, dessen Klemmrollen an ihren gegenüberliegenden Enden mit trompetenartigen Zapfen versehen sind. Diese Zapfen haben jedoch mit einer Montage der Freilaufanordnung nicht das geringste zu tun, sondern sie verhindern lediglich ein Herausfallen der Klemmrollen in radialer Richtung nach innen. Auch in der DE-OS 25 14 767 und der DE 24 38 007 C2 sind Freilaufkupplungen beschrieben, deren Klemmrollen im Endbereich einen verringerten Durchmesser aufweisen. Auch hier geht es wiederum nur um deren Halterung.

### Zusammenfassung der Neuerung

Der Neuerung liegt daher die Aufgabe zu Grunde, eine Klemmrollen-Freilaufkupplung so zu konzipieren, dass eine automatische Montage mit der zugehörigen Welle ohne Schwierigkeiten möglich ist.

Neuerungsgemäß wird diese Aufgabe nach dem kennzeichnenden Teil von Anspruch 1 dadurch gelöst, dass die Klemmrollen an wenigstens einer ihrer beiden Stirnseiten eine Fase derart aufweisen, dass bei nicht eingeschobener Welle der Hüllkreisdurchmesser D_{HK} des Stumpfes an seinem äußeren Ende gleich oder arößer als der Durchmesser D_{w} der Welle ist. Durch diese neuerungsgemäße radiale Anpassung von Klemmrolle und Welle ist gewährleistet, dass die Welle ungehindert zwischen die Klemmrollen eingeschoben werden kann und dabei die Klemmrollen radial nach außen gegen die innere Mantelfläche des Außenringes der Freilaufkupplung drückt.

Aus Anspruch 2 geht hervor, dass die Fase kegelstumpfartig, konvex, konkav oder in einer beliebig anderen Form gestaltet sein soll. In diesem Zusammenhang ist es auch denkbar, dass die Fase aus einer Kombination von geraden und gekrümmten Linien gebildet ist.

Schließlich ist in vorteilhafter Weise nach Anspruch 3 vorgesehen, dass die Fase unter einem Winkel von 60 bis 75° geneigt zur Stirnfläche der Klemmrolle verläuft. Dadurch ist sichergestellt, dass möglichst wenig an axialer Klemmfläche verlorengeht.

Die Neuerung wird an nachstehendem Ausführungsbeispiel näher erläutert.

### Kurze Beschreibung der Zeichnungen

Es zeigen:
- Figur 1: einen Längsschnitt durch einen Hülsenfreilauf,
- Figur 2: eine Seitenansicht des Hülsenfreilaufes gemäß Figur 1, teilweise geschnitten,
- Figur 3: eine schematische Darstellung der radialen Größenverhältnisse zwischen Klemmrollen und einzuführender Welle und
- Figur 4: eine vergrößerte, teilweise dargestellte Klemmrolle.

### Ausführliche Beschreibung der Zeichnungen

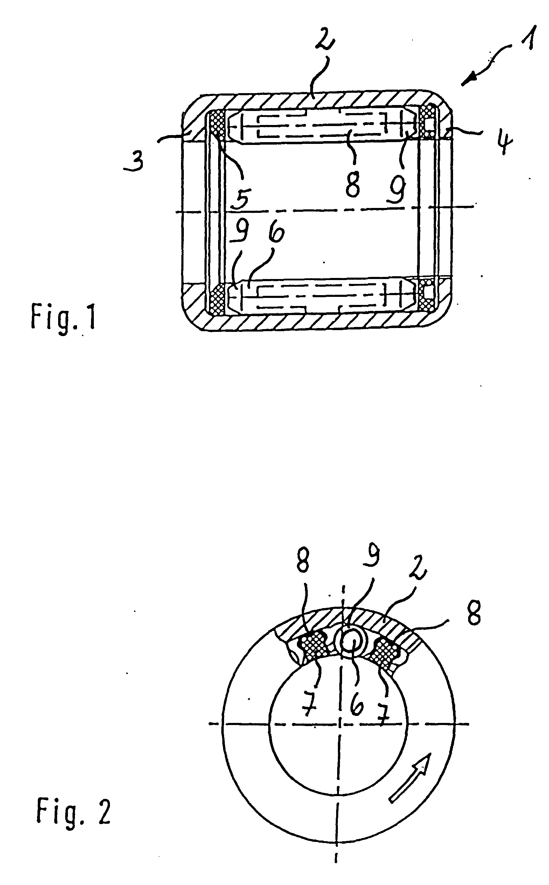

Aus den Figuren 1 und 2 geht der Aufbau des Hülsenfreilaufs 1 hervor, dessen spanlos geformte Hülse 2 an beiden Enden mit radial nach innen gerichteten Borden 3 und 4 versehen ist. Zwischen den Borden 3 und 4 ist der Käfig 5 angeordnet, der die Klemmrollen 6 aufnimmt. Auf den Stegen 7 des Käfigs 5 sind Federelemente 8 aufgesteckt, die für die Anfederung der Klemmrollen 6 sorgen.

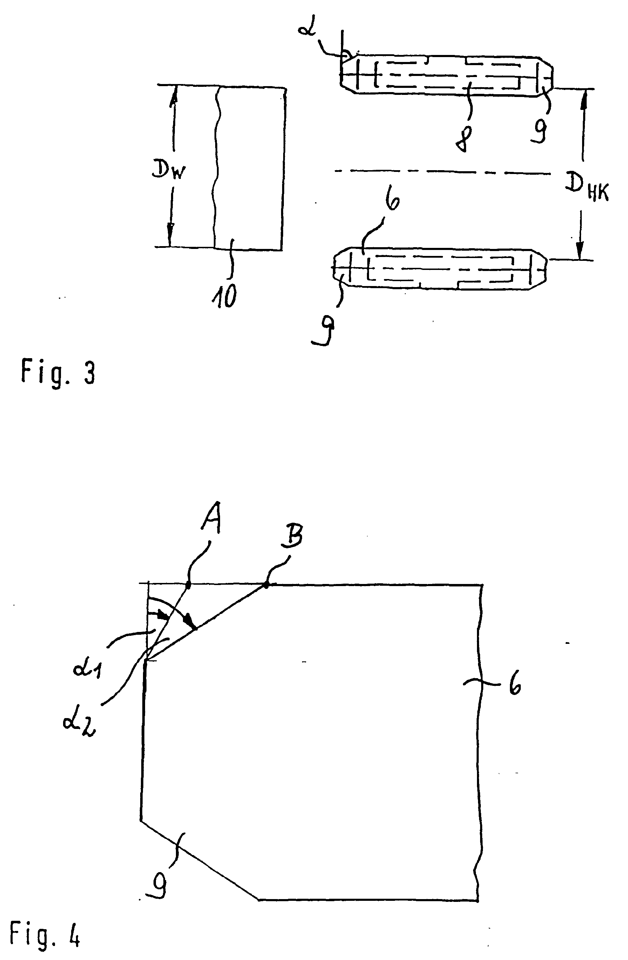

Wie aus Figur 3 ersichtlich, sind die Klemmrollen 6 an ihren gegenüberliegenden Enden mit der kegelstumpfartigen Fase 9 versehen, wobei der Hüllkreisdurchmesser D_{HK} der kegelstumpfartigen Fase 9 am Ende der Klemmrollen 6 größer als der Durchmesser D_{w} der Welle 10 ist, so dass diese ungehindert in die von Klemmrollen 6 und Stegen 7 begrenzte Aufnahmeöffnung des Käfigs 5 eingefädelt werden kann. Die Klemmrollen 6 werden dabei durch die Welle 10 radial nach außen in Richtung innere Mantelfläche der Hülse 2 bewegt.

Wie die vergrößert dargestellte Klemmrolle 6 in Figur 4 zeigt, verläuft die kegelstumpfartige Fase 9 unter einem Winkel α geneigt zu deren Stirnfläche. Es ist erkennbar, dass mit größer werdendem Winkel α die für die Klemmung zur Verfügung stehende Mantelfläche der Klemmrolle 6 abnimmt. Beim kleineren Winkel α1 reicht die Mantellinie bis zum Punkt A, während bei größerem Winkel α2 diese nur bis zum Punkt B reicht, also verringert ist.

### Bezugszeichen

- 1: Hülsenfreilauf
- 2: Hülse
- 3: Bord
- 4: Bord
- 5: Käfig
- 6: Klemmrolle
- 7: Steg
- 8: Federelement
- 9: Fase
- 10: Welle
- D_{w}: Durchmesser der Welle 10
- D_{HK}: Hüllkreisdurchmesser
- A, B: Punkt
- α: Winkel

## Patentansprüche

1. Freilaufkupplung zur Aufnahme einer Welle (10) mit einem Klemmflächen tragenden Außenring, in dem ein Klemmrollen (6) führender und zu deren Anfederung mit Federelementen (8) versehener Käfig (5) angeordnet ist, **dadurch gekennzeichnet, dass** die Klemmrollen (6) an wenigstens einer ihrer beiden Stirnseiten eine Fase (9) derart aufweisen, dass bei nicht eingeschobener Welle (10) der Hüllkreisdurchmesser D_{HK} des Stumpfes an seinem äußeren Ende gleich oder größer als der Durchmesser D_{w} der Welle (10) ist.

2. Freilaufkupplung nach Anspruch 1, **dadurch gekennzeichnet, dass** die Fase (9) kegelstumpfartig, konvex, konkav oder in einer beliebig anderen Form gestaltet ist.

3. Freilaufkupplung nach Anspruch 1, **dadurch gekennzeichnet, dass** die Fase (9) unter einem Winkel α von 60 bis 75° geneigt zur Stirnfläche der Klemmrolle (6) verläuft.
